(19) Europäisches Patentamt
European Patent Office
Office européen des brevets

(11) **EP 2 828 548 B1**

(12) **EUROPEAN PATENT SPECIFICATION**

(45) Date of publication and mention
of the grant of the patent:
**06.11.2019 Bulletin 2019/45**

(21) Application number: **13711441.9**

(22) Date of filing: **22.03.2013**

(51) Int Cl.:
*F16F 15/133* *(2006.01)*    *F16F 15/134* *(2006.01)*
*F16F 15/139* *(2006.01)*

(86) International application number:
**PCT/EP2013/056159**

(87) International publication number:
**WO 2013/139983 (26.09.2013 Gazette 2013/39)**

(54) **SPIRAL SPRING DUAL MASS FLYWHEEL HAVING A PARALLEL CONFIGURATION**

SPIRALFEDER-ZWEIMASSENSCHWUNGRAD MIT PARALLELER KONFIGURATION

VOLANT D'INERTIE À DOUBLE MASSE À RESSORT HÉLICOÏDAL AYANT UNE CONFIGURATION PARALLÈLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.03.2012  IT TO20120263**

(43) Date of publication of application:
**28.01.2015  Bulletin 2015/05**

(73) Proprietor: **Dayco Europe S.R.L.**
**Chieti (IT)**

(72) Inventors:
• **GIANSETTO, Giacomo**
**I-66100 Chieti (IT)**
• **MONTANI, Andrea**
**I-66010 Torre Vecchia Teatina (IT)**

• **CARICCIA, Gianluca**
**I-09170 Oristano (IT)**
• **DI GIACOMO, Tommaso**
**I-66010 San Martino Sulla Marrucina (IT)**

(74) Representative: **Franzolin, Luigi et al**
**Studio Torta S.p.A.**
**Via Viotti, 9**
**10121 Torino (IT)**

(56) References cited:
DE-A1- 3 823 384        DE-A1-102008 049 104
DE-A1-102008 049 105    US-A- 4 662 239
US-A- 4 751 993         US-A- 4 846 759
US-A1- 2004 040 815     US-A1- 2004 211 643
US-A1- 2010 273 607

**Description**

TECHNICAL FIELD

The invention relates to several embodiments of a dual mass flywheel having a parallel configuration of a resilient unit and a damping unit.

BACKGROUND ART

A dual mass flywheel may be used either in front-wheeled or in rear-wheeled cars. In the former case the layout of the driveline requires a particularly compact configuration that shall be at the same time functional to dampen torque fluctuations of the crankshaft and reduce or avoid transmission of torsional vibration to the driveline.

Furthermore, compact internal combustion engines may have a limited number of cylinders to reduce fuel consumption and therefore the torque fluctuations of the crankshaft are increased so that a flywheel having improved performances is needed.

DE102008049 104 A1 and DE 102008049 105 A1 disclose a flywheel comprising a primary and a secondary mass connected by a first substantially elastic and undamped stage and a second substantially damped stage connected in series between primary and secondary mass.

Further examples of double mass flywheel are disclosed in DE3823384A1, US4846759A, US4751993A, US4662239A, US2004/211643A1 and US2004/040815A1.

It is possible to simplify the layout of the flywheel, thus reducing

manufacturing costs and at the same time preserve a satisfactory angular oscillation absorbing performance.

DISCLOSURE OF INVENTION

The scope of the present invention is to provide a compact dual mass flywheel having effective decoupling or isolating performances.

The scope of the present invention is achieved with a torque converter assembly according to claim 1.

BRIEF DESCRIPTION OF THE DRAWINGS

For a better understanding of the present invention, the latter will further be disclosed with reference to the accompanying figures in which:

- figure 1 is a schematic functional sketch of a dual mass flywheel according to a first embodiment of the present invention;
- figure 2 is a schematic functional sketch of a dual mass flywheel according to a second embodiment of the present invention;
- figure 3 is a schematic functional sketch of a dual mass flywheel according to a third embodiment of the present invention;
- figure 4 is a schematic functional sketch of a dual mass flywheel according to a fourth embodiment of the present invention; and
- figure 5 is a cross section of possible variants of a spring element provided in any of the embodiments of the present invention.

BEST MODE FOR CARRYING OUT THE INVENTION

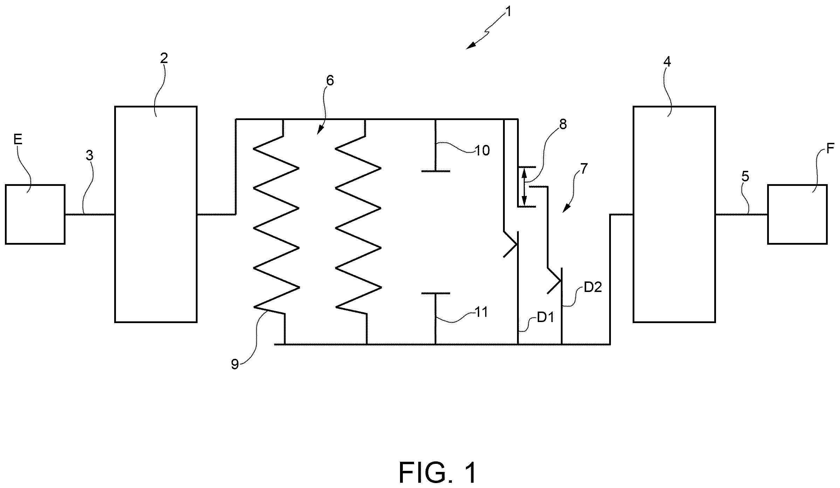

In figure 1, numeral 1 refers to dual mass flywheel comprising a primary flywheel mass 2 rigidly connected to crankshaft 3 of an internal combustion engine E, a secondary flywheel mass 4 to transfer torque of engine E to a driveline comprising an input shaft 5 of a gearbox G, a spiral spring unit 6 to resiliently couple primary flywheel mass 2 to secondary flywheel mass 4, and a damping unit 7 arranged in parallel to spiral spring unit 6 with respect to primary and/or secondary flywheel mass 2, 4. In particular, spiral spring unit 6 is constrained such to be loaded from a positive to a negative tension load depending from the torque direction at the primary or secondary flywheel mass 2, 4. Therefore, in case torque at the primary flywheel mass 2 changes direction, spiral spring unit 6 has a stress field which is the opposite to the one acting before the torque direction change, i.e. the stress field is a tension stress for one torque direction and a compression stress in the other torque direction, tension and compression stress being non-uniform over the cross section of the spiral spring during loading.

According to a preferred embodiment of the present invention, damping unit 7 is attached between primary flywheel mass 2 and secondary flywheel mass 4 such that a gap 8 is provided. Gap 8 and damping unit 7 are configured so that damping unit 7 generates a damping torque acting between primary and secondary flywheel mass 2, 4 when the transmitted torque exceeds a predefined torque level that is set e.g. by the mechanical properties of spiral spring unit 6. Taking into consideration the mechanical properties of spiral spring unit 6, the above predefined torque level defines a corresponding predefined relative angular displacement between primary and secondary flywheel mass 2, 4. When the angular displacement between primary and secondary flywheel mass 2, 3 is higher than such predefined displacement, damping unit 7 increases the state of damping and in particular applies an additional damping torque between primary and secondary flywheel masses 2, 3.

In particular, when gap 8 is closed such that the additional damping torque of damping unit 7 is generated, the additional damping torque acting between primary and secondary flywheel mass 2, 4 is higher than 10 Nm. A preferred minimum value of gap 8 is such that the additional level of damping torque is not applied when primary and secondary flywheel mass 2, 4 are angularly displaced by less than 8°, preferably less than 5°, with respect to one another.

Preferably, damping unit 7 is a dry friction damping unit. Damping unit 7 comprises a first damping device D1 providing a friction torque for any relative angular displacement of primary and secondary flywheel mass 2, 4 at a level comprised between 10 Nm and 2 Nm. Furthermore, a further damping device D2 is provided and is configured to apply the additional friction torque. Preferably, friction torque of each damping device D1 and D2 is substantially constant over rotating speed and this may be obtained with a friction element loaded by a spring along a direction parallel to the axis of rotation of the flywheel, in particular by a Belleville spring.

Further friction damping torques may be provided possibly increasing with rotation speed. However, the maximum value of such further friction damping torque is lower at least than friction torque of damping device D2 for any working condition of the flywheel.

As a preferred embodiment of the present invention, spiral spring unit 7 comprises at least a spiral spring 9 having a number of volutes or convolution defined by an angle comprised between 250° and 600° and a height / width ratio or aspect ratio of the cross section comprised between 0.4 and 0.8. In the present description and claims, a spiral spring comprises spires or portions of spires having a variable curvature and, therefore, a variable radius. Such variation may be either continuous or discontinuous. As an example, at least a portion of each spiral spring 9 may be shaped as an Archimedes' spiral. Furthermore, the spires provide a radial gap to avoid direct contact. Alternatively, there might be two or more spiral springs arranged with an axial offset among each other.

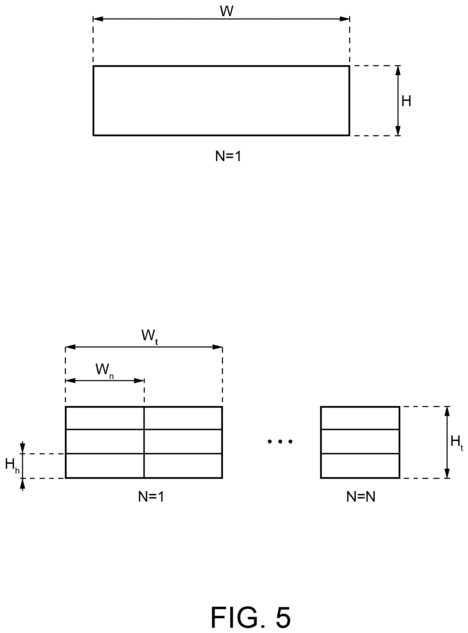

As an even preferred embodiment, the cross section of each spiral spring 9 has a maximum width comprised between 10mm and 30mm and a maximum height comprised between 4mm and 12mm. Preferably, each spiral spring is made of a flat metal wire spring. In particular, it is also possible that a number of spiral springs having a flat faced cross section are connected in parallel and have overall maximum values of the cross section comprised within the above ranges. In this case, the cross section of the spiral springs is either the same or each spring may have its own cross section. In particular, as shown in figure 5, overall maximum width Wt is::

$$Wt = \sum_{n=1}^{N} (W_n)$$

i.e. the sum of the widths of the cross sections of the metal springs.

It is also possible that overall maximum height Ht be the sum of:

$$Ht = \sum_{n=1}^{N} (H_n)$$

i.e. the sum of the heights of the cross sections of the metal springs.

In case there is a spiral spring having a rectangular cross section, it has proven to be of a certain relevance to improve the performance over fatigue life that the fillet to connect planar faces of each spiral spring 9 be comprised between 1mm and 3mm. Preferably, the cross section of each spiral spring is substantially square or rectangular. The above features serve alone and, better, in combination to obtain the desired range of stiffness or spring rate to decouple the torsional vibrations coming from the crankshaft 3 and, at the same time, achieve the desired fatigue life. Furthermore, the above geometrical ranges help alone or better in combination to obtain spiral spring unit having volutes that do not contact each other in functioning conditions. Furthermore, the spring is ready-to-manufacture and has therefore a positive impact on manufacturing costs of the assembly.

In order to limit the maximum torque transferred in one, preferably both, direction of relative rotation between primary and secondary flywheel mass 2, 4, a pair of abutments 10, 11 are provided and brought by primary and secondary flywheel mass 2, 4 respectively.

When abutments 10, 11 are spaced, spiral spring unit 6 is loaded by the relative angular displacement between primary and secondary flywheel mass 2, 4. When torque to be transmitted reaches a predefined level, abutments 10, 11 are contacting and from torque to be transmitted that is higher than the predefined level at least more than half of the torque value exceeding the above predefined level is transferred from primary to secondary flywheel mass 2, 4 trough abutments 10, 11.

In particular, figure 1 shows hard or rigid abutments 10, 11. When abutments 10, 11 are rigid torque exceeding the predefined level is transferred between masses 2, 4 almost entirely by the abutments. This means that at least theoretically abutments 10, 11 are infinitely rigid.

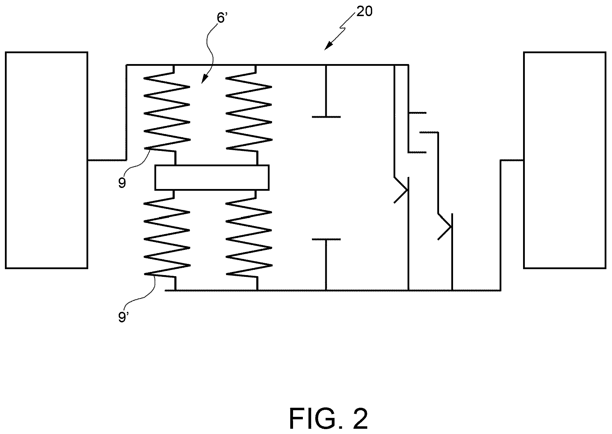

Figure 2 shows a dual mass flywheel 20 having the same components described for flywheel 1 with the exception that a spiral spring unit 6' comprises a series of at least two springs 9, 9' mounted between primary and secondary flywheel mass 2, 4. At least one of springs 9, 9' is a spiral spring and, preferably, has the above cited dimensions relating to convolution and shape and aspect ratio of the cross section.

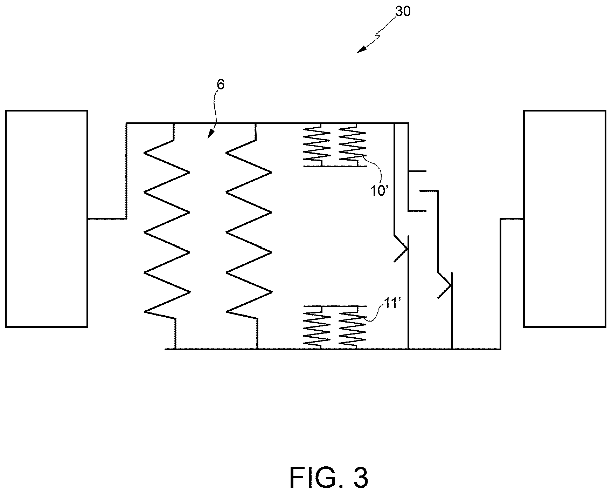

Figure 3 shows a dual mass flywheel 30 having the same components described for flywheel 1 above with the exception that abutments 10', 11' are resilient. Therefore, when the torque load is higher than the predefined level for abutment, primary and secondary flywheel mass 2, 4 can still angularly displace for a certain range defined by the maximum compression of the abutments 10', 11'. Preferably the torsional spring rate of abutments 10', 11' is higher than the one of spiral spring unit 6 so that the torque exceeding predefined torque level is transferred for the great part by abutments 10', 11'.

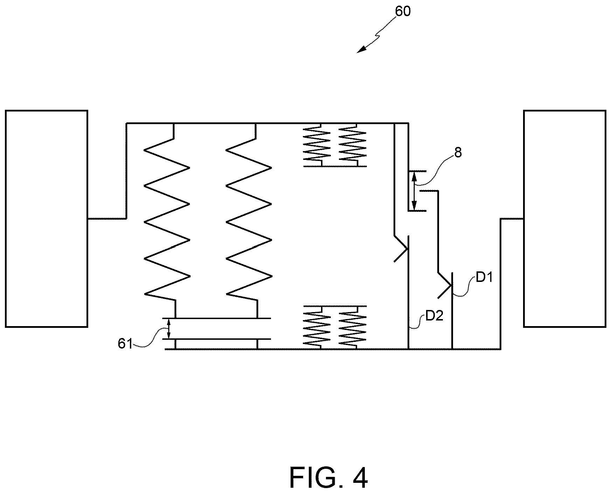

Figure 4 shows a dual mass flywheel 60 having the same components described for flywheel 30 above with the exception that a further gap 61 is provided so that there is an angular displacement range where primary and secondary flywheel mass 2, 4 relatively displace without a resilient action of spiral spring unit 6 being active. Preferably, within the angular displacement range defined by gap 61 damping device D1 is active. When gap 61 is present, the relative angular range is less or equal to the one defined by gap 8 of damping device D2 so that the latter is always active when also spiral spring unit 6 transfers torque between primary and secondary flywheel mass 2, 4.

Furthermore, damping torque of damping device D1, D2 is such that when the internal combustion engine E is idling and the input shaft 5 is disconnected from gearbox G, i.e. the vehicle is not moving or the clutch between input shaft 5 and gearbox G is open, secondary flywheel mass 4 is dragged by primary flywheel mass 2 so that gap 61 is at least momentarily open. This can be achieved e.g. when torque by damping device is sufficient to overcome friction torques acting on secondary flywheel mass 4 in the above conditions.

The present invention provides the following advantages.

The flywheel provides the combination of features to obtain efficient isolating properties and, at the same time, provide a compact and simple to manufacture configuration.

Spiral springs of spring unit 6 are built so that the torque of the IC engine is duly transferred to input shaft 5 of gearbox G and, at the same time, volutes of the spiral spring do not contact each other during functioning to avoid damages and improve fatigue life.

Gap 8 provides an angular range wherein the decoupling or isolating function of spring unit 6 is improved because damping has a relatively low level. Furthermore, when gap 8 is closed, damping level increases and this is essential to improve the damping action in resonance condition.

Furthermore, gap 61 is placed such as to avoid that secondary flywheel mass 4 and springs 9 defines a resonator attached to primary flywheel mass 2. Therefore, a the relative resonance frequency is avoided and this is useful in particular at idling when the vehicle is not moving or the gearbox G is disconnected from the flywheel.

Finally it is clear that modifications and variants may be made to the pulley assembly disclosed and shown herein without departing from the scope of protection defined by the appended claims.

In particular, spiral spring unit 6 is axially symmetrical and, in particular, springs are angularly equispaced.

Furthermore, the damping torque of D1 can be substantially of 5 Nm.

## Claims

1. Flywheel comprising a first flywheel mass (2) for connection with a crankshaft, a second flywheel mass (4) for connection with a gearbox, a spiral spring unit (6) for resiliently connecting said primary and secondary flywheel mass (2, 4), a damping unit (7) in parallel to said spiral spring unit (6) with respect to said second flywheel mass (4), and a gap (8) provided to increase the damping torque of said damping unit (7) acting between said primary and secondary flywheel mass (2, 4) at a predefined angular displacement of said primary flywheel mass (2) with respect to said secondary flywheel mass (4) .

2. Flywheel according to claim 1, **characterized in that** said spiral spring unit (6) has volutes defining an angle comprised between 250° and 600°.

3. Flywheel according to any of the preceding claims, **characterized in that** said spiral spring unit (6) has an overall cross section height / width ratio comprised between 0.4 and 0.8.

4. Flywheel according to any of the preceding claims, wherein said spiral spring unit (6) comprises a spiral spring having flat faces and fillet radius between the flat faces comprised between 1mm and 3mm.

5. Flywheel according to any of the preceding claims, **characterized by** comprising a first and a second stop (10, 11) to limit the maximum load applied by said primary and secondary flywheel mass (2, 4) to said spiral spring unit (6).

6. Flywheel according to claim 5, wherein at least one of said first and second stop (10', 11') is resilient to provide further relative rotation between said primary and secondary flywheel mass (2, 4) after abutment of said first and second stop (10', 11').

7. Flywheel according to any of the preceding claims, wherein said spiral spring unit (6) comprises a series of at least two springs, at least one of which is a spiral spring.

8. Flywheel according to any of the preceding claims, wherein said damping unit (7') is a dry friction damping unit.

9. Flywheel according to any of the preceding claims, **characterized in that** a further gap (61) is provided between one of said primary and secondary flywheel mass (2; 4) and said spiral spring unit (6) so that an angular range is defined wherein said primary and secondary flywheel mass (2, 4) angularly displace and said spiral spring unit (6) does not resiliently interact with said primary and secondary flywheel mass (2, 4).

**Patentansprüche**

1. Schwungrad, Folgendes umfassend: eine erste Schwungradmasse (2) zur Verbindung mit einer Kurbelwelle, eine zweite Schwungradmasse (4) zur Verbindung mit einem Getriebe, eine Spiralfedereinheit (6) zum elastischen Verbinden der primären und sekundären Schwungradmasse (2, 4), eine Dämpfungseinheit (7), die in Bezug auf die zweite Schwungradmasse (4) parallel zur Spiralfedereinheit (6) geschaltet ist, und einen Spalt (8), der vorgesehen ist, um bei einer vorgegebenen Winkelverschiebung der primären Schwungradmasse (2) relativ zur sekundären Schwungradmasse (4) das Dämpfungsdrehmoment der Dämpfungseinheit (7) zu erhöhen, das zwischen der primären und sekundären Schwungradmasse (2, 4) wirkt.

2. Schwungrad nach Anspruch 1, **dadurch gekennzeichnet, dass** die Spiralfedereinheit (6) Spiralen hat, die einen Winkel definieren, der zwischen 250° und 600° liegt.

3. Schwungrad nach einem der vorhergehenden Ansprüche, **dadurch gekennzeichnet, dass** die Spiralfedereinheit (6) ein Höhe/Breite-Verhältnis des Gesamtquerschnitts hat, das zwischen 0,4 und 0,8 liegt.

4. Schwungrad nach einem der vorhergehenden Ansprüche, wobei die Spiralfedereinheit (6) eine Spiralfeder umfasst, die flache Seiten hat und einen Kehlradius zwischen den flachen Seiten, der zwischen 1 mm und 3 mm liegt.

5. Schwungrad nach einem der vorhergehenden Ansprüche, **dadurch gekennzeichnet, dass** es ein erstes und ein zweites Anschlagelement (10, 11) umfasst, um die maximale Last zu begrenzen, die von der primären und sekundären Schwungradmasse (2, 4) auf die Spiralfedereinheit (6) einwirkt.

6. Schwungrad nach Anspruch 5, wobei wenigstens eines von dem ersten und zweiten Anschlagelement (10', 11') elastisch ist, um nach dem Anschlagen des ersten und zweiten Anschlagelements (10', 11') eine weitere relative Verdrehung zwischen der primären und sekundären Schwungradmasse (2, 4) bereitzustellen.

7. Schwungrad nach einem der vorhergehenden Ansprüche, wobei die Spiralfedereinheit (6) eine Reihe von wenigstens zwei Federn umfasst, wobei wenigstens eine von diesen eine Spiralfeder ist.

8. Schwungrad nach einem der vorhergehenden Ansprüche, wobei die Dämpfungseinheit (7') eine Trockenreibungsdämpfungseinheit ist.

9. Schwungrad nach einem der vorhergehenden Ansprüche, **dadurch gekennzeichnet, dass** zwischen einer von der primären und sekundären Schwungradmasse (2, 4) und der Spiralfedereinheit (6) ein weiterer Spalt (61) vorgesehen ist, derart, dass ein Winkelbereich definiert ist, in dem die primäre und sekundäre Schwungradmasse (2, 4) sich in Bezug auf den Winkel verschieben und die Spiralfedereinheit (6) nicht elastisch mit der primären und sekundären Schwungradmasse (2, 4) zusammenarbeitet.

**Revendications**

1. Volant comprenant une première masse de volant (2) pour un raccordement à un vilebrequin, une seconde masse de volant (4) pour un raccordement à une boîte de vitesses, une unité de ressort hélicoïdal (6) pour un raccordement élastique desdites première et seconde masses de volant (2, 4), une unité d'amortissement (7) en parallèle avec ladite unité de ressort hélicoïdal (6) par rapport à ladite seconde masse de volant (4), et un espacement (8) prévu pour augmenter le couple d'amortissement de ladite unité d'amortissement (7) agissant entre lesdites première et seconde masses de volant (2, 4) à un déplacement angulaire prédéfini de ladite première masse de volant (2) par rapport à ladite seconde masse de volant (4).

2. Volant selon la revendication 1, **caractérisé en ce que** ladite unité de ressort hélicoïdal (6) a des volutes définissant un angle compris entre 250° et 600°.

3. Volant selon l'une quelconque des revendications précédentes, **caractérisé en ce que** ladite unité de ressort hélicoïdal (6) a un rapport de hauteur sur largeur de coupe transversale hors tout compris entre 0,4 et 0,8.

4. Volant selon l'une quelconque des revendications précédentes, dans lequel ladite unité de ressort hélicoïdal (6) comprend un ressort hélicoïdal ayant des faces plates et un rayon de congé de raccordement entre les faces plates compris entre 1 mm et 3 mm.

5. Volant selon l'une quelconque des revendications précédentes, **caractérisé en ce qu'**il comprend des première et seconde butées (10, 11) pour limiter la charge maximale appliquée par lesdites première et seconde masses de volant (2, 4) à ladite unité de ressort hélicoïdal (6).

6. Volant selon la revendication 5, dans lequel au moins l'une desdites première et seconde butées (10', 11') est élastique pour fournir une rotation relative supplémentaire entre lesdites première et seconde masses de volant (2, 4) après l'aboutement desdites première et seconde butées (10', 11').

7. Volant selon l'une quelconque des revendications précédentes, dans lequel ladite unité de ressort hélicoïdal (6) comprend une série d'au moins deux ressorts, au moins l'un d'eux étant un ressort hélicoïdal.

8. Volant selon l'une quelconque des revendications précédentes, dans lequel l'unité d'amortissement (7') est une unité d'amortissement à frottement sec.

9. Volant selon l'une quelconque des revendications précédentes, **caractérisé en ce qu'**un espacement supplémentaire (61) est prévu entre l'une desdites première et seconde masses de volant (2, 4) et ladite unité de ressort hélicoïdal (6) de manière à définir une plage angulaire dans laquelle lesdites première et seconde masses de volant (2, 4) se déplacent angulairement et ladite unité de ressort hélicoïdal (6) n'interagit pas élastiquement avec lesdites première et seconde masses de volant (2, 4).

FIG. 1

FIG. 2

FIG. 3

FIG. 4

W

H

N=1

$W_t$

$W_n$

$H_h$

$H_t$

N=1

N=N

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102008049104 A1
- DE 102008049105 A1
- DE 3823384 A1
- US 4846759 A
- US 4751993 A
- US 4662239 A
- US 2004211643 A1
- US 2004040815 A1